Europäisches Patentamt

European Patent Office

Office européen des brevets

(11) Publication number: **0 184 587**
**B1**

(12) **EUROPEAN PATENT SPECIFICATION**

(45) Date of publication of patent specification: **28.03.90**

(51) Int. Cl.⁵: **G 06 F 3/02**

(21) Application number: **84115017.0**

(22) Date of filing: **11.12.84**

(54) **Robot operator for a computer Terminal.**

(43) Date of publication of application:
**18.06.86 Bulletin 86/25**

(45) Publication of the grant of the patent:
**28.03.90 Bulletin 90/13**

(84) Designated Contracting States:
**DE FR GB NL**

(56) References cited:
**EP-A-0 111 130**
**GB-A-1 116 450**
**US-A-4 088 981**
**US-A-4 272 813**
**US-A-4 377 852**

**PATENTS ABSTRACTS OF JAPAN, vol. 6, no. 46
(P-107)924r, 24th March 1982; & JP - A - 56 162
123 (HITACHI SEISAKUSHO K.K.) 12-12-1981**

**IBM TECHNICAL DISCLOSURE BULLETIN, vol.
23, no. 9, February 1981, page 4006, Armonk,
US; C.H. SEDERHOLM et al.: "Intelligent
telephone"**

(73) Proprietor: **International Business Machines
Corporation
Old Orchard Road
Armonk, N.Y. 10504 (US)**

(72) Inventor: **Kuiper, H. F.
Mijzijde 49
3471 GP Kamerik (NL)**

(74) Representative: **Louet Feisser, Arnold et al
Intellectual Property Department IBM Nederland
N.V. Watsonweg 2
NL-1423 ND Uithoorn (NL)**

(56) References cited:
**PATENTS ABSTRACTS OF JAPAN, vol. 8, no. 55
(P-260)1492r, 13th March 1984; & JP - A - 58 203
565 (HITACHI SEISAKUSHO K.K.) 28-11-1983**

## Description

### Field of the Invention

This invention relates to an apparatus for simulating a human user or operator at a terminal workstation connected to a computer system, and more specifically to a programmable apparatus adapted to be attached to a terminal station and capable to receive and interpret the human readable information supplied by the computer system to the terminal and to respond to this information with messages or commands, thus simulating a human user.

Especially, this invention provides a robot operator with the capability to watch the availability of a computer system, the robot being programmed to respond on system failure with a telephone call to the human operator, thus allowing unattended functioning of a large computer system, e.g. during off-hours.

### Background of the Invention

Large data processing systems are organised and programmed to service many users simultaneously, e.g. hundreds of terminals may be connected to a computer system and yet the system appears to each user at his or her terminal as an individual and instant service facility.

The interactive communication between the user and the computer system occurs according to predetermined protocols in human readable form, the user commands and system responses being displayed on the terminal screen. When making this invention it was realized that the well defined sequence of user commands and system responses itself may be controlled by a microprocessor to assist or to replace the user. Up till now such a device was not available.

Computer systems are often active during non-office hours e.g. for processing big jobs in batch mode or other purposes. Although the system operates independently, the system operator has to be present to restart the system in case of failure. As the system operator has to cope with the exception, a robot operator for watching an unattended system is desirable.

### Brief Description of Prior Art

Communication between computer systems is in itself well known in the art, e.g. computer systems communicate with each other even in world wide computer networks. However, such communications cannot be considered interactive and in human readable form.

Signaling computer failure by another computer is also known in itself, e.g. in telephone exchanges two parallel operating computers are used and upon failure of one system, the back-up system takes over under signaling the malfunctioning. Again, the computers do not mutually communicate in human readable information.

Diagnostic programs checking computer failures are also well known and widely used. Such programs are internal computer activities invoked for checking the correctness of each specific function in the machine before the machine becomes operative, but they do not monitor and control the normal or exceptional functioning of the entire system, as would a human operator by his attention and interventions.

JP-A-58 203 565 (Patent Abstracts of Japan, vol. 8, no. 55 (P-260)[1492], March 13, 1984) describes a device for independent interactive communication with the computer system in human readable form. The device may reduce the operator's job because it automatically repeats a former response from the operator upon a received signal which is recognized as being identical to a former signal.

### Summary of the Invention

The object of the invention is to provide a robot operator capable to handle an interactive session at a computer terminal, thus replacing the human operator.

According to the invention the terminal station provided with a screen and having a line connection for interactive communication with a computer system and an additional device for independent interactive communication with the computer system in human readable form is characterized in that the said additional device is programmable and comprises a microprocessor connected to the said line connection through a deserializer and comprises a keyboard simulator, switchably connected to the said terminal for replacing the human operated keyboard, and wherein the microprocessor is programmed to respond to the information supplied by the computer system to the terminal.

Further features of the invention are described in the claims and elucidated hereinafter.

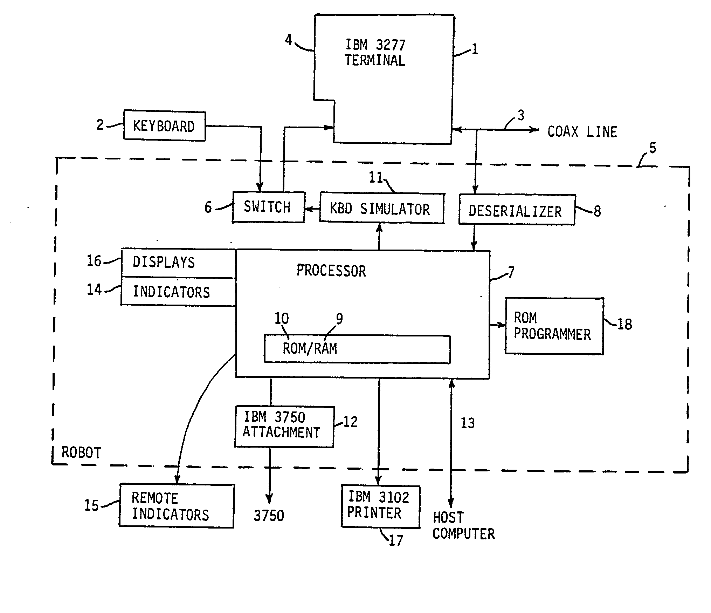

### Brief Description of the Drawing

The drawing shows a terminal workstation with additional hardware to illustrate a preferred embodiment of the invention.

### Description of the Preferred Embodiment

In the drawing, a terminal 1 and a keyboard 2 constitute a conventional terminal station, connected to a mainframe computer system through a coax line 3 for interactive communication with the system in human readable form. The commands, data or information entered by the user through keyboard 2 are supplied to a buffer storage within the terminal, for display on the frontscreen 4 and, upon pressing a special key such as the enter-key or a function-key, the contents of the terminal buffer storage is transferred to the computer. Responses of the computer are also supplied to the terminal buffer and displayed on the terminal screen 4, thus allowing human readable interactive communication with the computer system. These terminal workstations are well known in the art and are widely used.

According to the invention, the terminal workstation consisting of terminal 1 and keyboard 2 is equipped with a robot apparatus, in the drawing generally indicated with 5. When a toggle switching device 6 connects terminal 1 and keyboard 2 the terminal station functions as a normal user operated station, but in the alternative position of switch 6 the keyboard 2 is disconnected and the powered robot 5 is active. The robot is equipped and programmed to use the terminal 1 for interactive communication with the computer system, thus replacing and simulating the human user.

In the drawing, a microprocessor 7 in the robot apparatus 5 is connected to the coax line 3 through a deserializer 8, such that the serial data supplied by the computer system to the terminal 1 for display on screen 4, via line 3, is also received by the microprocessor 7. Microprocessor 7 contains a random access memory 9 for storing the information supplied by the computer system and a read only storage 10 for storing the robot programs. A microprocessor of the Motorola 6800 series was used to run the robot device, but other commercially available microprocessors may serve this purpose equally.

Microprocessor 7 is programmed to store and then analyse the information received from the computer system as stored in RAM 9 and to generate a response, e.g. a further command to the system. Thereto, the output of the microprocessor 7 is supplied to the keyboard simulator 11, connected by switch 6 to terminal 1 and replacing the keyboard 2. The keyboard simulator is a conventional device, also known as a computer port, suitable for supplying characters to the terminal in the same manner as a human operated keyboard, under control of the microprocessor.

The robot apparatus 5 further contains an attachment 12 for connecting the microprocessor 7 to a telephone exchange system (such as, an IBM 3750) and also a further connection 13 to a host computer is provided. The host connection 13 allows to enter the robot programs written under the editor of the host computer and the finished robot programs are downloaded from the host into the microprocessor memory for controlling the robot operation. The ROM programmer 18 provides a means to transfer the robot program into a permanent form by imprinting the code in a ROM chip, e.g. an EPROM (erasable programmable read only memory) commercially available from Intel Corp. or other suppliers.

Visual check of the robot operation is provided through attached indicator lamps 14, remote indicators 15 and a register display 16. A local printer 17 is connected to microprocessor 7 for printing robot messages.

Operation

As stated above, the terminal workstation operates as a normal computer terminal when switch 6 connects keyboard 2 to terminal 1. The user may log on to the system according to the predetermined procedure from the powered terminal when the system logo or a similar indication is displayed, signaling that the system is available and accessible from this terminal. The user will log-on by supplying his unique user identification and password to the system in order to be connected for service. The system logo will be a unique picture frame visually identifying the computer system on the display screen. The information and commands entered by the user are stored in the terminal buffer and displayed on the screen, while upon pressing the ENTER key, or a function key, the information is transferred from the terminal buffer to the computer system through line 3. The computer responds with a complete frame of 25 lines with 80 characters each, which are entered in the terminal buffer and displayed on screen 4, whereupon the user may enter the next information and command in the interactive communication with the computer.

The robot is activated by powering on and putting switch 6 in the position to connect the keyboard simulator 11 to terminal 1. The information supplied by the computer, e.g. the system logo, is loaded into the robot memory upon a first entry from the robot, which may be a single simulated pressing of the ENTER key performed by KBD simulator 11. The serial data supplied by the responding computer system is assembled into 8-bit bytes by the deserializer 8 and supplied to the microprocessor 7 for subsequent storing in a screen buffer area of 2000 bytes in the Random Access Memory 9 of the microprocessor, as well as being displayed on frontscreen 4 of terminal 1.

Microprocessor 7 is programmed to analyse the data supplied by the computer system and stored in RAM 9, and to generate a response or action in accordance with predetermined instructions of the user. E.g., the robot may handle the log-on procedure and subsequent commands. Examples of the different detailed operations carried out by the microprocessor 7 on the information supplied by the system are given in the next chapter titled Robot Instructions.

The response generated by the microprocessor is supplied to the keyboard simulator 11 for a subsequent character by character input into the terminal storage, thus simulating an entry of a human user.

Instead of or in addition to supplying a response to the computer system the robot may be instructed to make a phone call to the system operator in response to certain data supplied by the computer or absence thereof, as illustrated in the next chapter, Robot Instructions.

Other robot instructions cause the robot to print messages upon occurrence of certain conditions, e.g. upon detection of internal failure.

The robot device is further provided with indicator lights and a display panel controlled by the robot program and adapted to visualize the robot functioning.

Robot Instructions

A set of high-level instructions is provided for the user to program the robot microprocessor. To further illustrate the operation of the device some of the instructions are specified below by way of a non limitative example. For each instruction the corresponding operation and the format is specified.

KBDD — SIMULATE A STRING OF KEYBOARD CHARACTERS —
The string of characters added as an argument to this instruction will be sent to the terminal through the keyboard simulator when the instruction is executed.
Format: KBDD 'string'

KBDK — SIMULATE KEYBOARD FUNCTION KEY —
A function code corresponding to a selected function key (PF1—PF12) of the human operated keyboard as specified by 'keyid' will be transferred by the keyboard simulator to the terminal, upon the execution of this instruction.
Format: KBDK 'keyid'

RDRESP — READ RESPONSE FROM COAX CABLE —
This instruction will read data passing along the coax cable into the screen buffer.
Format: RDRESP ss, 'label', ee
wherein $ss$ specifies a time lapse, *label* specifies a branch if timeout occurs, and $ee$ specifies a timeout after the last data item has been read from the cable.

SRCH — SEARCH FOR CHARACTER STRING IN SCREEN BUFFER —
This instruction will search the copy of the screen buffer contents to detect a series of characters equal to the string supplied with the instruction, and branch if the search is successful.
Format: SRCH 'string', 'label'

LAMP — CONTROL INDICATORS —
This instruction will turn indicators on and off.
Format: LAMP local/remote, green/red, nn, off/on
in which $nn$ specifies the lamp number.

BUZZER — CONTROL LOCAL BUZZER —
This instruction will turn the local buzzer on or off.
Format: Buzzer on/off.

SAVE — SAVE PART OF SCREEN BUFFER —
This instruction will save a part of the screen buffer in a 512-byte area.
Format: SAVE oo, cc, ba
in which $oo$ specifies a screen address, $cc$ specifies the number of bytes to be saved, and $ba$ specifies the address in the area where the data is to be stored.

COMPARE — COMPARE SCREEN BUFFER TO SAVED DATA —
This instruction will compare data in the 512-byte area with data in the screen buffer.

Format: COMP oo, cc, ba, 'label'

PRNTBFR — PRINT SAVED DATA —
This instruction will print data from the 512-byte save area.
Format: PRNT oo, cc

DIAL — DIAL A TELEPHONE NUMBER —
This instruction will dial a telephone number.
Format: DIAL 'string', label
in which 'string' specifies a telephone number.

TONE — SEND TONE OVER THE TELEPHONE —
This instruction will send audio tones over the telephone.
Format: TONE ll, hh
in which *ll* specifies the length and $hh$ the height of the tone.

ONHOOK — END OF TELEPHONE CONVERSATION —
This instruction will end a telephone connection.
Format: ONHOOK

WAIT — WAIT A SPECIFIED TIME —
This instruction will cause a wait.
Format: WAIT nn
in which $nn$ specifies the wait time.

Unattended Operation of a Computer System
The computer system displays its logo on all connected powered terminals to inform the users about the availability of the system. When more systems are accessible through one terminal normally a listing of these systems is displayed on the terminal screen with for each system the indication 'on-line'. Upon failure of the system the logo disappears, or, respectively, the indication 'on-line' is replaced by 'off-line'.
From the foregoing it will be clear that the robot operator attached to any terminal of the computer system may be programmed to read the system logo or, respectively, the on-line indication, and to detect the absence of the logo or the presence of an off-line indication upon system failure.
This feature of the robot operator is particularly attractive because it allows unattended operation of even a large computer system during off-hours when big jobs in batch mode are processed. Depending on the circumstances the robot processor may be programmed to make a phone call to the operator, or take any other adequate action, such as signalling a guard, buzzing or sending a message through another system available at the terminal.

Robot Programs
Robot programs may be written under the facilities of the host computer, and then be stored on the disk memory of the host computer and loaded down into RAM 9 when needed, using host computer connection 13. The robot is provided with a ROM programmer 18 capable to write the program from RAM 9 into a ROM chip (EPROM), thus ensuring a reliable operation of the robot controlled by a program in a permanent form. Writing programs in permanent form in ROM chips is in itself well known and as such not a part of this invention.

While the invention has been particularly shown and described with a preferred embodiment thereof, it will be understood by those skilled in the art that various changes in form and details may be made therein without departing from the scope of the invention.

## Claims

1. Terminal station (1) provided with a screen (4) and having a line connection (3) for interactive communication with a computer system and an additional device (5) for independent interactive communication with the computer system in human readable form, characterized in that the said additional device is programmable and comprises a microprocessor (7) connected to the said line connection (3) through a deserializer (8) and comprises a keyboard simulator (11), switchably connected to the said terminal for replacing the human operated keyboard, and wherein the microprocessor (7) is programmed to respond to the information supplied by the computer system to the terminal.

2. Terminal station (1) according to claim 1, characterized by the said keyboard simulator (11) entering coded characters successively supplied by the microprocessor into a terminal buffer for subsequent transfer to the computer system upon generation of an ENTER code by the microprocessor.

3. Terminal station (1) according to claim 1 or 2, characterized in that said deserializer is programmed to transfer the serial data supplied by the computer system byte by byte to the microprocessor for building a complete replica of the screen (4) in the memory of the microprocessor to be analysed, whereby the additional programmable device having been programmed to check in the said replica the presence of the system's logo or the indication "system on-line" and to issue a warning message upon absence of such logo or indication.

4. Terminal station (1) according to one or more of the preceding claims, characterized in that the microprocessor is programmed to check the on-line status of several accessible systems and for issuing a warning message on one system in case the failure of another system is detected.

5. Terminal station (1) according to one or more of the preceding claims, characterized in that the microprocessor is connected to status indicators (14, 15, 16) and buzzers located both on the machine and at a remote position for displaying error status and raising an audible alarm in case of detection of a system failure.

6. Terminal station (1) according to one or more of the preceding claims, characterized by a telephone attachment (12) of the microprocessor (7), the microprocessor being programmed to make a phone call upon detection of a predetermined occurrence, e.g. system failure.

## Patentansprüche

1. Terminal (1), versehen mit einem Bildschirm (4) und einer Leitungsverbindung (3) zur interaktiven Kommunikation mit einem Computersystem, ausserdem mit einem zusätzlichen Gerät (5) für eine unabhängige, interaktive Kommunikation mit dem Computersystem in von Menschen lesbarer Form, dadurch gekennzeichnet, dass das besagte zusätzliche Gerät programmierbar ist und einen Mikroprozessor (7) umfasst, der über einen "Seriell-Parallel-Wandler" (8) an die besagte Leitungsverbindung (3) angeschlossen ist, und einen Tastatur-Simulator (11) umfasst, der schaltbar mit dem besagten Terminal verbunden ist, um diese von Menschen bediente Tastatur zu ersetzen, und wobei der Mikroprozessor (7) so programmiert ist, dass er auf die Information antwortet, die vom Computersystem dem Terminal zur Verfügung gestellt wird.

2. Terminal (1) gemäss Anspruch 1, gekennzeichnet indem der besagte Tastatur-Simulator (11) verschlüsselte Zeichen eingibt, die sukzessive vom Mikroprozessor an den Terminalpuffer übertragen werden, um anschliessend, nachdem der ENTER-Code vom Mikroprozessor generiert wurde, an das Computersystem weitergeleitet zu werden.

3. Terminal (1) gemäss Anspruch 1 oder 2, dadurch gekennzeichnet, dass der besagte "Seriell-Parallel-Wandler" so programmiert ist, dass er die seriellen Daten, die das Computersystem liefert, byteweise an den Mikroprozessor überträgt, um ein vollständiges Gegenstück des Bildschirms (4) im Speicher des Mikroprozessors aufzubauen damit es analysiert werden kann, wobei das zusätzliche, programmierbare Gerät so programmiert wurde, dass es in dem besagten Gegenstück das Vorhandensein des System-Logos oder des Hinweises "System on-line" überprüft und beim Fehlen eines solchen Logos oder Hinweises eine Warnmeldung ausgibt.

4. Terminal (1) gemäss einem oder mehreren der vorhergehenden Ansprüche, dadurch gekennzeichnet, dass der Mikroprozessor so programmiert ist, dass er den 'On-line'-Status von mehreren zugänglichen Systemen überprüft und eine Warnmeldung auf einem System ausgibt, falls eine Störung auf einem anderen System entdeckt wird.

5. Terminal (1) gemäss einem oder mehreren der vorhergehenden Ansprüche, dadurch gekennzeichnet, dass der Mikroprozessor mit den Status-Kontrollampen (14, 15, 16) und den Summern verbunden ist, die sowohl an der Maschine als auch an einer entfernten Position angebracht sind, um den Fehlerstatus anzuzeigen und einen hörbaren Alarm auszulösen, falls eine Systemstörung entdeckt wird.

6. Terminal (1) gemäss einem oder mehreren der vorhergehenden Ansprüche, gekennzeichnet durch einen Telefonanschluss (12) an den Mikro-

prozessor (7), wobei der Mikroprozessor so programmiert ist, dass ein Telefonanruf gemacht werden kann, wenn ein vorher festgelegtes Ereignis, z.B. eine Systemstörung, eintritt.

## Revendications

1. Une station type terminal (1) équipée d'un écran (4) et d'une connexion par ligne (3) permettant des communications interactives avec un système ordinateur et un appareil supplémentaire (5) permettant des communications interactives indépendantes avec l'ordinateur, dans une forme lisible par l'homme, caractérisées par le fait que ledit dispositif supplémentaire est programmable et se compose d'un microprocesseur (7) relié à ladite connexion par ligne (3) par l'intermédiaire d'un convertisseur série-parallèle (8) et comprenant aussi un simulateur de clavier (11), relié audit terminal par un dispositif de commutation, dans le but de remplacer le clavier utilisé par l'homme et ou le microprocesseur (7) est programmé pour répondre aux informations fournies au terminal par ledit système ordinateur.

2. La station type terminal (1) selon la revendication 1, caractérisée par le simulateur de clavier (11) qui met des caractères codés fournis successivement par le microprocesseur dans une mémoire tampon en vue de leur transmission ultérieure au système ordinateur, après génération d'un code ENTER par le microprocesseur.

3. La station type terminal (1) selon la revendication 1 ou à la revendication 2 caractérisée par le fait que ledit convertisseur est programmé pour transférer vers le microprocesseur, octet par octet, les données en série fournies par l'ordinateur, afin de construire une réplique complète de l'écran (4) dans la mémoire du microprocesseur à analyser, et ou l'appareil programmable supplémentaire a été programmé pour rechercher dans ladite réplique la présence du logo du système ou encore de l'indication "système en ligne" et pour lancer un message d'avertissement lorsque le logo ou l'indication est absent.

4. La station type terminal (1) selon l'une ou plusieurs des revendications précédentes caractérisée par le fait que le microprocesseur est programmé pour vérifier l'état 'en ligne' de plusieurs systèmes accessibles et pour lancer un message d'avertissement par un système, lorsqu'une panne d'un autre système est détectée.

5. Station type terminal (1) selon l'une ou plusieurs des revendications précédentes, caractérisée par le fait que le microprocesseur est relié à des indicateurs d'état (14, 15, 16) et à des ronfleurs disposés à la fois sur la machine et sur un site éloigné, pour afficher les états d'erreur, et pour déclencher une alarme sonore si une panne du système est détectée.

6. Station type terminal (1) selon l'une ou plusieurs des revendications précédentes, caractérisée par une interconnexion téléphonique (12) du microprocesseur étant programmé pour faire un appel téléphonique s'il détecte un événement prédéterminé, par exemple une panne du système.